# EUROPEAN PATENT SPECIFICATION

(11) **EP 1 385 684 B1**
(45) Date of publication and mention of the grant of the patent: **11.06.2008**
(21) Application number: 02763989.7
(22) Date of filing: 05.04.2002
(51) Int. Cl.: B29C 45/14

(54) **RETRACTABLE OVERMOLDED INSERT RETENTION APPARATUS**
ZURÜCKZIEHBARE HALTEVORRICHTUNG FÜR ÜBERSPRITZTEN EINSATZ
APPAREIL DE MAINTIEN DE PRISONNIER SURMOULE ET ESCAMOTABLE

(30) Priority: 06.04.2001 US 281959 P
(43) Date of publication of application: 04.02.2004
(73) Proprietor: Covidien AG, 8212 Neuhausen am Rheinfall (CH)
(72) Inventor: DUFFIN, Terry, M., Westminster, CO 80234 (US)
(74) Representative: HOFFMANN EITLE
(86) International application number: PCT/US2002/011097
(87) International publication number: WO 2002/081170

(56) References cited:
- WO-A-89/11386
- DE-A- 4 330 323
- DE-A- 19 925 059
- FR-A- 2 302 185
- FR-A- 2 556 645
- GB-A- 2 103 534
- US-A- 5 639 403
- PATENT ABSTRACTS OF JAPAN vol. 009, no. 288 (E-358), 15 November 1985 (1985-11-15) & JP 60 130129 A (NIPPON DENKI KK), 11 July 1985 (1985-07-11)
- PATENT ABSTRACTS OF JAPAN vol. 9, no. 100 (M-376), 2 May 1985 (1985-05-02) & JP 59 224314 A (SHINKOU DENKI KOGYO KK), 17 December 1984 (1984-12-17)

## Description

### BACKGROUND

### 1. Technical Field

The present disclosure relates to an apparatus and method for molding plastics. More particularly, the present disclosure relates to an apparatus and method for injection molding an overmold on an insert or stamping.

### 2. Background of Related Art

Injection molding machines typically use one or more so-called insert mold tools to form an overmold on an insert or stamping. Generally prior to formation of the overmold, the insert mold tool is disposed in its disassembled configuration to enable positioning of the insert or stamping within the insert mold tool. The insert mold tool is, in turn, installed on (or otherwise cooperates with) an injection molding machine which infuses a liquid resin into the insert mold tool under pressure. The interior dimensions of the insert mold tool define the shape of the overmold resin as it cools and cures into a solid overmold and bonds to the stamping.

In some cases, a series of fixed extensions are seated within the insert mold tool and are designed to retain/fix the stamping in position within the insert mold tool during the injection process. Typically, the extensions contact parts of the stamping that are raised or otherwise extend above or beyond the overmold portion to minimize their impact on the shape of the overmold as it cures while insuring proper positioning of the stamping within the overmold insert tool. It is known that stampings not held in position during the injection process are vulnerable to being unseated due to the high pressures and temperatures normally associated with infusing the liquid overmold resin into the insert mold tool.

Utilizing the fixed extensions also has some disadvantages. More particularly, the points of affixation to the stamping tend to obstruct the molding process, i.e., as the overmold cures, the fixed extensions leave voids or pockets in the overmold which must be subsequently filled. As can be appreciated, this requires additional manufacturing steps, e.g., potting of the voids with a similar resin, a quick curing epoxy-based material, or the like. As a result, the injection molding process becomes more time consuming and typically requires additional quality control especially in certain applications which must meet specific code requirements, e.g., electrosurgical applications. For example, in many of these instances the voids have to be potted by hand, cured, inspected, and then the surface finished to meet the final requirements of the product. Thus, many known insert overmold applications require extra time-consuming steps and additional materials and resources to fill the voids left in the overmolded insert by the fixed extensions.

It would therefore be desirable to perform injection molding in a single step process utilizing an apparatus and method which retains the stamping in a seated position in the insert mold tool during the injection molding process and does not create voids in the overmolded insert when cured.

US 5,639,403 discloses a method of embedding a workpiece within a resin by the use of a mold. At least one supporting pin removably projects into a cavity of the mold to support the workpiece. The supporting pin is removed from the cavity after the workpiece is supported by the pressure of resin injected into the cavity. This document forms the basis of the pre-amble of claim 1.

### SUMMARY

The present disclosure relates to an insert retention apparatus which includes an actuator having a power system, a drive assembly and a control unit. The retention apparatus also includes an insert mold tool and at least one retention post having an axis defined therethrough which is operably connected to the drive assembly of the actuator. The retention post is configured for movement through the insert mold tool by the drive assembly between at least two positions; a first position wherein the retention post engages and maintains a stamping in fixed position within the insert mold tool while a liquid resin is injected into the insert mold tool; and a second position wherein the retention post is disengaged and moved relative to the stamping prior to the resin completely curing. The actuator is configured to both translate the retention post along the axis and rotate the retention post about the axis to facilitate disengagement with the stamping. Preferably, the drive assembly includes a piston which controls the movement of the retention post from the first to second positions.

In one embodiment, the insert retention apparatus includes a sensor which initiates disengagement and withdrawal of the retention post from the stamping after sensing a predetermined condition. Alternatively, the control unit can include a timer which initiates disengagement and withdrawal of the retention post from the stamping after a predetermined time period.

In another embodiment, the insert mold tool includes an infusion valve which is utilized to inject resin into the insert mold tool. The infusion valve may also be configured to initiate disengagement and withdrawal of the retention post from the stamping after a predetermined amount or resin flows therethrough.

The present disclosure also relates to a method of forming an overmold on a stamping and includes the steps of providing an actuator including a power system, a drive assembly and a control unit. An insert mold tool and at least one retention post is also provided. The retention post has an axis defined therethrough. The insert mold tool is operably connected to the drive assembly of the actuator.

The method further includes the step of engaging a stamping with the retention post to maintain the stamping in fixed position within the insert mold tool. Thereafter, a liquefied overmold resin is injected under pressure into the insert mold tool. The drive assembly is then activated to disengage the retention post from the stamping and withdraw the retention post through the insert mold tool in response to a signal from the control unit. The overmold resin is then allowed to cure and bond the stamping. The actuator is configured to both translate the retention post along the axis and rotate the retention post about the axis to facilitate disengagement with the stamping.

In one method according to the present disclosure, after the step of activating the drive assembly to disengage the retention post, additional resin is injected into the insert mold tool. In another method, the control unit signals the disengagement and withdrawal of the retention post after approximately 50% of the insert mold tool is filled with overmold resin.

According to additional methods of the present disclosure, the control unit signals the disengagement and withdrawal of the retention post upon the expiration of a predetermined time period or based upon a specific physical parameter of the resin which is attained during the curing process, e.g., hardness, viscosity and/or pressure.

### BRIEF DESCRIPTION OF THE DRAWINGS

Preferred embodiments of the presently disclosed retractable overmolded insert retention apparatus and method are described herein with reference to the drawings, wherein:
FIG. 1 is a cross-sectional view of a retractable overmolded insert retention apparatus in accordance with the present disclosure showing the insert retention apparatus in a first position with an insert retention post retaining a stamping in a seated position within an insert mold tool; and
FIG. 2 is the cross-sectional view of the retention apparatus of FIG. 1 shown in a second position wherein the retention post is separated from the stamping during the curing process.

### DETAILED DESCRIPTION OF PREFERRED EMBODIMENTS

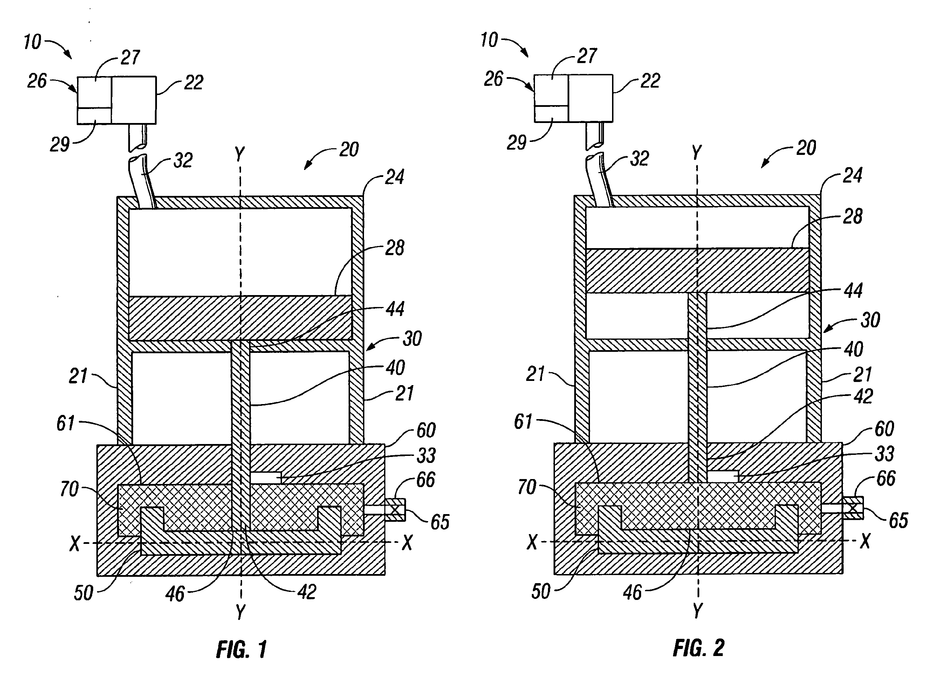

Referring now in specific detail to the drawings in which like reference numerals identify similar or identical elements throughout the several views, one embodiment of a retractable overmolded insert retention apparatus is shown in Figs. 1 and 2 and is generally identified as retention apparatus 10. Fig. 1 illustrates the retention apparatus 10 in a first position prior to injection of an overmold resin 70 into the insert mold tool and Fig. 2 illustrates the position of the retention apparatus 10 after injection and/or during the curing process of the overmold resin 70.

As shown, retention apparatus 10 is mounted to and positioned for use with an insert mold tool 60 of an injection molding machine (not shown). Retention apparatus 10 includes an actuation system (or actuator) 20 which cooperates with an insert retention assembly 30 to position a retention post 40 into and out of contact with a stamping 50 mounted or seated within the insert mold tool 60.

Insert mold tool 60 includes longitudinal axes X, Y, and Z defined therethrough. Longitudinal axis Z extends perpendicularly to plane X-Y but is not shown. Insert mold tool 60 includes an internal cavity 61 which is dimensioned to define the external shape of the overmold resin 70 when cured. In one embodiment, the overmold 70 is made from a plastic material which electrically insulates the stamping 50 during an electrosurgical procedure. It is envisioned that other types of overmold resins may be used to form the overmold 70 depending upon a particular purpose or to achieve a specific result. Generally, the overmold 70 is injected in a liquid form under pressure through an infusion valve 65 disposed in the insert mold tool 60. Infusion valve 65 can be oriented at any angle relative to the stamping 50 to infuse overmold resin 70 into the insert mold tool 60.

Insert retention assembly 30 includes the retention post 60 which is movable via piston 28 from a first position which retains the stamping 50 in fixed position within the insert mold tool 60 to a second position which disengages the retention post 60 from the stamping to allow curing of the overmold 70. As best shown in Fig. 1, retention post 40 maintains stamping 50 in a fixed position prior to the initiation of the injection molding process. Retention post 40 includes a distal end 42 and a proximal end 44 and is generally movable along longitudinal axis Y by the drive assembly 24. Retention post 40 is preferably rod-like or cylindrical, however, it is envisioned that retention post 40 can be configured in a variety of geometric shapes and circumferences which have suitable structural integrity to maintain the stamping 50 in a fixed position during the infusion of the liquefied overmold resin 70 into the insert mold tool 60.

In one embodiment according to the present disclosure, retention post 40 is made of stainless steel and has a surface finish which minimizes bonding with the liquefied overmold resin 70 during infusion and curing. It is envisioned that the retention post 40 can be made from a variety of different materials or combinations of materials which minimize or impede bonding with the overmold resin 70 during curing. Moreover, it is contemplated that the retention post 40 may be coated with one or more materials which reduce or minimize bonding with the overmold resin 70 during the infusion and curing processes.

It is also envisioned that the distal end 42 of retention post 40 can be configured to include one or more mechanical interfaces which cooperate with one or more corresponding mechanical interfaces disposed on stamping 50 to maintain the stamping 50 in a fixed position within the insert molding tool 60 during the infusion and curing processes. For example, the distal end 42 may include one or more a detents (not shown) and the stamping may include corresponding recesses (not shown) which align and seat the stamping 50 within the insert mold tool 60. As can be appreciated, different combinations of mechanical interfaces can be designed such that the interengagement of these mechanical interfaces restrict the movement of the stamping 50 along the X, Y and Z axes.

As illustrated in Figs. 1 and 2, actuator 20 includes a power system 22, a drive assembly 24, and a control unit 26. The insert retention assembly 30 (which includes the piston 28 and the retention post 40) is preferably housed within the drive assembly 24 and mounts atop a standoff 21. Alternatively, the insert retention assembly 30 could stand alone and mechanically or electromechanically interact with the drive assembly 24 depending upon a particular purpose or to achieve a specific result. In one preferred embodiment, actuator 20 partially mounts atop insert mold tool 60 and is remotely controlled by power system 22. Alternatively, the power system 22 can be mounted or otherwise engaged atop the drive assembly 24. It is also envisioned that actuation system 20 can use one or more of the existing drive mechanisms of the injection molding machine in combination with an independent power system 22 to control the insert retention assembly 30. It is contemplated that power system 22 may utilize one or more hydraulic, pneumatic, electrical, or electro-mechanical systems (or combinations thereof) to control the mechanical movement of the retention assembly 30.

As mentioned above and as shown in the comparison of Figs. 1 and 2, drive assembly 24 is pneumatically driven and includes piston 28 which moves retention post 40 from a first position wherein the distal end 42 of the retention post 40 engagably maintains stamping 50 in a fixed position within insert tool 60 to a second position wherein the retention post is disengaged from stamping 50 at a predetermined position relative to insert mold tool 60 to promote curing of the overmold resin 70. A stop member (not shown) may be employed to regulate the distance and pressure applied by retention post 40 when in contact with stamping 50 in the seated position. The rate of withdrawal of the retention post 40 relative to the stamping 50 may be fixed or variable depending upon one or more curing parameters associated with the injection molding process.

As shown in Figs. 1 and 2, the control unit 26 and power system are connected to the drive assembly 24 by a power supply 22. The control unit 26 cooperates with the insert molding injection machine and the infusion valve 65 to control the drive assembly 24 to move the retention assembly 30, i.e., piston 28 and retention post 40, prior to the overmold resin 70 completely curing. As can be appreciated, the timing of the disengagement and withdrawal of the retention post 40 is important to both the proper formation of the overmold resin 70 during curing to encapsulate and bond to the stamping 50 and to prevent the formation of voids and/or pockets in the cured overmold 70 which would have to be potted in a subsequent manufacturing step.

Moreover, the timing of the disengagement and withdrawal of the retention post 40 assures the proper and complete formation of the overmold resin 70 atop the stamping 50, i.e., without pockets, which also electrical insulates the remaining portions of the electrosurgical instrument. In other words, the complete formation of the overmold resin 70 atop the stamping without void or pockets reduces the risk of stray electrical currents emanating from the stamping during electrosurgical activation. As explained in more detail below, the voids or pockets may also be filled or potted in a subsequent step (during the final stages of the fill phase or during the hold and fill phase as mentioned below) which backfills the pockets or voids after removal of the retention post 40 but before the overmold resin 70 has completely cured.

It is envisioned that the control unit 26 may incorporate a timing device 27 (or a computer algorithm) which signals the drive assembly 24 to disengage and withdraw the retention post 40 from the stamping 50 after a predetermined time period from the initiation of the injection process. It is also envisioned that the withdrawal of the retention post 40 will generally coincide with the time when the structural integrity of the overmold resin 70 is strong enough to support/retain the stamping 50 in the desired orientation and position in the insert mold tool 60 until the overmold resin 70 has completely cured.

Alternatively, the control unit 26 may include a sensing device 29 which detects one or more curing parameters to initiate withdrawal of the retention post 40 when the parameters are satisfied, e.g., temperature, weight, viscosity, etc. Additional devices may also be employed which cooperate with the control unit 26 and infusion valve 65 to measure the quantity and/or rate that the overmold resin 70 is being injected into the insert mold tool 60 and to initiate withdrawal of the retention post 40 once a certain threshold is satisfied. For example; the infusion valve may include a gauge 66 which measures the flow quantity and/or flow rate during the injection process. The control unit 26 can monitor the gauge 66 and disengage and withdraw the retention post 40 once a certain quantity of resin 70 has been injected into the insert mold tool 60. A durometer 33 may also be employed proximate the insert molding tool 60 to measure the hardness of the overmold during the curing process which could initiate withdrawal of the retention post 40.

Additional sensors (not shown) may be associated with the retention post 40 for the measuring the position of the retention post 40 relative to stamping 50 or measuring the strength of mechanical engagement between the stamping 50 and the retention post 40. These types of sensor systems could be configured to provide feedback to the control unit 26 ensuring proper seating, positioning and engagement of the stamping 50 within the insert tool 60.

In use, one or more retention posts 40 are moved to the first position to engage and maintain the stamping 50 in a fixed position within the insert mold tool 60. An overmold resin 70 is then injected in liquid form into the insert mold tool 60 though the infusion port 65 by the injection molding machine at approximately 8,000 psi (600 kg/m²). Generally, this so-called "fill phase" lasts approximately 0.5 to 0.75 seconds. However, longer fill phases are also envisioned, e.g., 5, 10 seconds, or more). After a sufficient quantity of a overmold resin 70 has been injected into the insert mold tool 60 or after a predetermined time period, the retention post is disengaged with the stamping 50 and withdrawn from the insert mold tool 60.

Preferably, the retention post 40 is disengaged and withdrawn from the insert mold tool such that the tip 46 of the retention post 40 is approximately flush with the inside cavity 61 of insert mold tool 60 which reduces the amount of excess resin extruding from the overmold. As mentioned above, one or more sensors 29 may also be employed to also initiate disengagement and withdrawal of the retention post 40.

It is contemplated that retention post 40 can be withdrawn during the fill phase or in a subsequent "hold and pack phase" in which additional overmold resin 70 is injected to compensate for shrinkage during the cooling and curing of the overmold resin 70. In one embodiment, retention post 40 is disengaged from stamping after the fill phase is approximately 50-95% complete. In another embodiment, the retention post 40 is withdrawn when approximately 33-100% of the fill phase is complete or when approximately 25% of the hold and fill phase is complete.

As can be appreciated, the timing of the withdrawal is dependent upon various parameters which change according to the particular resin being used, e.g., curing temperature, curing pressure, curing rate, product architecture, etc. The timing of the withdrawal of the retention post 40 is also important to assure that any voids or pockets left in the overmold 70 a result of withdrawal of the retention post 40 are filled during the final stages of the fill phase or during the hold and fill phase. For example, when the function of the overmold 70 is to form a dielectric insulative coating over a portion of the stamping 50 for electrosurgical purposes, the retention post 40 should be withdrawn in a time frame which ensures that the required minimum thickness of the insulative overmold 70 is satisfied.

Certain modifications can also be made to the present disclosure. For example, although the retention apparatus 10 is shown supporting one stamping 50 for use with forming one overmold 70, the retention apparatus 10 can be configured to support multiple stampings 50 within a single insert mold tool 60 which increases production while also increasing overall manufacturing quality. This may particularly advantageous in automated configurations.

While rod 40 is shown as moving along longitudinal axis Y approximately perpendicular to the longitudinal axis X of stamping 50, the actuation system 20 of the present invention is configured to both translate retention post 40 along axis Y and rotate retention post 40 about axis Y to facilitate disengagement with stamping 50; i.e., the combined rotation and translation movement of retention post 40 will reduce the resin-to-retention post 40 bond during withdrawal. Actuation system 20 may also be configured to support and subsequently move retention Post 40 at an angle relative to stamping 50 depending upon a particular purpose and/or to facilitate removal of the retention post 40 to promote curing of the overmold 70.

Although only one retention post 40 is depicted herein, it is contemplated that more than one retention post 40 may be employed with insert mold tool 60. For example, in additional embodiments, the insert retention assembly 30 may include a series of retention posts 40 which cooperate to maintain the stamping 50 in position within the insert mold tool 60.

## Claims

1. An insert retention apparatus, comprising:
an actuator (20) including a power system (22), a drive assembly (24) and a control unit (26);
an insert mold tool (60); and
at least one retention post (40) having an axis (Y) defined therethrough operably connected to the drive assembly of the actuator configured for movement through the insert mold tool between a first position wherein the at least one retention post engages and maintains a stamping in fixed position within the insert mold tool while a liquid resin is injected into the insert mold tool to a second position wherein the at least one retention post is disengaged and moved relative to the stamping prior to the resin completely curing, the apparatus **characterized in that**:
the actuator is configured to both translate the retention post along the axis and rotate the retention post about the axis to facilitate disengagement with the stamping.

2. An insert retention apparatus according to claim 1 wherein the control unit includes a timer (27) which initiates disengagement and withdrawal of the retention post from the stamping after a predetermined time period.

3. An insert retention apparatus according to claim 1 further comprising a sensor (29) which initiates disengagement and withdrawal of the retention post from the stamping after sensing a predetermined condition.

4. An insert retention apparatus according to claim 1 wherein the insert mold tool includes an infusion valve (65) and the infusion valve initiates disengagement and withdrawal of the retention post from the stamping after a predetermined amount of resin flows through the infusion valve.

5. An insert retention apparatus according to claim 1 wherein the drive assembly includes a piston (28) which controls the movement of the retention post from the first to second positions.

6. A method of forming an overmold (70) on a stamping (50) comprising the steps of:
providing:
an actuator (20) including a power system (22), a drive assembly (24) and a control unit (26);
an insert mold tool (60); and
at least one retention post (40) having an axis (Y) defined therethrough operably connected to the drive assembly of the actuator;
engaging the stamping with the retention post to maintain the stamping in fixed position within the insert mold tool;
injecting an overmold resin (70) under pressure into the insert mold tool;
activating the drive assembly to disengage the retention post from the stamping and withdraw the retention post through the insert mold tool in response to a signal from the control unit; and
allowing the overmold resin to cure and bond to the stamping, the method **characterized in that**:
the actuator is configured to both translate the retention post along the axis and rotate the retention post about the axis to facilitate disengagement with the stamping.

7. A method according to claim 6 wherein after the step of activating the drive assembly to disengage the retention post, the method further includes the step of:
injecting additional resin into the insert mold tool.

8. A method according to claim 6 or 7 wherein the control unit signals the disengagement and withdrawal of the retention post after 50% of the insert mold tool is filled with resin.

9. A method according to claim or 7 wherein the control unit signals the disengagement and withdrawal of the retention post when 50% to 95% of the resin has been injected into the insert mold tool.

10. A method according to claim 6 or 7 wherein the control unit signals the disengagement and withdrawal of the retention post based upon a reading from a durometer (33).

11. A method according to claim 6 or 7 wherein the control unit signals the disengagement and withdrawal of the retention post based upon the expiration of a predetermined time period.

12. A method according to claim 6 or 7 wherein the control unit signals the disengagement and withdrawal of the retention post based upon a predetermined pressure reading.

13. A method according to claim 6 or 7 wherein the control unit signals the disengagement and withdrawal of the retention post based upon a predetermined viscosity.

## Patentansprüche

1. Einsatzhaltevorrichtung, umfassend:
einen Aktuator (20) mit einem Stromversorgungssystem (22), einer Antriebsanordnung (24) und einer Steuerungseinheit (26);
ein Einsatzspritzgusswerkzeug (60); und
mindestens einen Haltestab (40) mit einer dort durch definierten Achse (Y), der operativ mit der Antriebsanordnung des Aktuators verbunden ist und der gestaltet ist, um sich durch das Einsatzspritzgusswerkzeug zwischen einer ersten Position, in der der mindestens eine Haltestab mit einem Pressteil eingreift und es in einer festen Position im Einsatzspritzgusswerkzeug hält, während ein flüssiges Kunstharz in das Einsatzspritzgusswerkzeug eingespritzt wird, und einer zweiten Position zu bewegen, in der der mindestens eine Haltestab vom Pressteil gelöst und relativ dazu bewegt wird, bevor das Kunstharz vollständig ausgehärtet ist, wobei die Vorrichtung **dadurch gekennzeichnet ist, dass**:
der Aktuator gestaltet ist, um den Haltestab sowohl entlang der Achse zu verschieben als auch den Haltestab um die Achse zu drehen und so das Lösen von dem Pressteil zu erleichtern.

2. Einsatzhaltevorrichtung nach Anspruch 1, wobei die Steuerungseinheit einen Zeitgeber (27) umfasst, welcher das Lösen und das Zurückziehen des Haltestabs vom Pressteil nach einem vorbestimmten Zeitraum einleitet.

3. Einsatzhaltevorrichtung nach Anspruch 1, weiter einen Sensor (29) umfassend, der das Lösen und das Zurückziehen des Haltestabs vom Pressteil nach dem Erkennen einer vorbestimmten Bedingung einleitet.

4. Einsatzhaltevorrichtung nach Anspruch 1, wobei das Einsatzspritzgusswerkzeug ein Infusionsventil (65) umfasst und das Infusionsventil das Lösen und das Zurückzeihen des Haltestabs aus dem Pressteil einleitet, nachdem eine vorbestimmte Menge an Kunstharz durch das Infusionsventil fließt.

5. Einsatzhaltevorrichtung nach Anspruch 1, wobei die Antriebsanordnung einen Kolben (28) umfasst, der die Bewegung des Haltestabs von der ersten in die zweite Position steuert.

6. Verfahren zum Ausbilden einer Überspritzform (70) auf einem Pressteil (50), umfassend die folgenden Schritte:
Bereitstellen:
eines Aktuators (20) mit einem Stromversorgungssystem (22), einer Antriebsanordnung (24) und einer Steuerungseinheit (26);
eines Einsatzspritzgusswerkzeug (60); und
mindestens eines Haltestabs (40) mit einer dort durch definierten Achse (Y), der operativ mit der Antriebsanordnung des Aktuators verbunden ist;
Eingreifen des Pressteils mit dem Haltestab, um das Pressteil in einer fixierten Position im Einsatzspritzgusswerkzeug zu halten;
Einspritzen eines Überspritz-Kunstharzes (70) unter Druck in das Einsatzspritzgusswerkzeug;
Aktivieren der Antriebsanordnung, um den Haltestab vom Pressteil zu lösen und den Haltestab als Reaktion auf ein Signal von der Steuerungseinheit durch das Einsatzspritzgusswerkzeug zurückzuziehen; und
Aushärten lassen und Verbinden lassen des Überspritzkunstharzes mit dem Pressteil, wobei das Verfahren **dadurch gekennzeichnet ist, dass**:
der Aktuator so gestaltet ist, dass er den Haltestab sowohl entlang der Achse verlagert als auch den Haltestab um die Achse dreht und so das Lösen von dem Pressteil zu erleichtern.

7. Verfahren nach Anspruch 6, wobei nach dem Schritt des Aktivierens der Antriebsanordnung, um den Haltestab zu lösen, das Verfahren weiter den folgenden Schritt umfasst:
Einspritzen von zusätzlichem Kunstharz in das Einatzspritzgusswerkzeug.

8. Verfahren nach Anspruch 6 oder 7, wobei die Steuerungseinheit das Lösen und das Zurückziehen des Haltestabs signalisiert, nachdem 50% des Einsatzspritzgusswerkzeugs mit Kunstharz gefüllt ist.

9. Verfahren nach Anspruch 6 oder 7, wobei die Steuerungseinheit das Lösen und das Zurückziehen des Haltestabs signalisiert, nachdem 50% bis 95% des Kunstharzes in das Einsatzspritzgusswerkzeug eingespritzt wurde.

10. Verfahren nach Anspruch 6 oder 7, wobei die Steuerungseinheit das Lösen und das Zurückziehen des Haltestabs basierend auf einer Ablesung von einem Durometer (33) signalisiert.

11. Verfahren nach Anspruch 6 oder 7, wobei die Steuerungseinheit das Lösen und das Zurückziehen des Haltestabs basierend auf dem Verstreichen einer vorbestimmten Zeitdauer signalisiert.

12. Verfahren nach Anspruch 6 oder 7, wobei die Steuerungseinheit das Lösen und das Zurückziehen des Haltestabs basierend auf einer vorbestimmten Druckablesung signalisiert.

13. Verfahren nach Anspruch 6 oder 7, wobei die Steuerungseinheit das Lösen und das Zurückziehen des Haltestabs basierend auf einer vorbestimmten Viskosität signalisiert.

## Revendications

1. Appareil de maintien d'insert, comprenant :
un actionneur (20) incluant un système moteur (22), un ensemble d'entraînement (24) et une unité de commande (26) ;
un outil de moulage d'insert (60) ; et
au moins un montant de retenue (40) ayant un axe (Y) défini à travers celui-ci fonctionnellement relié à l'ensemble d'entraînement de l'actionneur configuré pour un mouvement à travers l'outil de moulage d'insert entre une première position où au moins un montant de retenue vient en prise avec et maintient un estampage dans une position fixe dans l'outil de moulage d'insert pendant qu'une résine liquide est injectée dans l'outil de moulage d'insert à une seconde position dans laquelle au moins un montant de retenue est sorti de prise et est déplacé relativement à l'estampage avant le durcissement complet de la résine, l'appareil étant **caractérisé en ce que :**
l'actionneur est configuré à la fois pour amener le montant de retenue à effectuer un mouvement de translation le long de l'axe et à faire tourner le montant de retenue autour de l'axe pour faciliter la sortie de prise avec l'estampage.

2. Appareil de maintien d'insert selon la revendication 1, où l'unité de commande comprend une horloge (27) qui initie la sortie de prise et le retrait du montant de retenue de l'estampage après une période de temps prédéterminée.

3. Appareil de maintien d'insert selon la revendication 1, comprenant en outre un capteur (29) qui initie la sortie de prise et le retrait du montant de retenue de l'estampage après avoir détecté une condition prédéterminée.

4. Appareil de maintien d'insert selon la revendication 1, où l'outil de moulage d'insert comprend une vanne d'infusion (65), et la vanne d'infusion initie la sortie de prise et le retrait du montant de retenue de l'estampage après qu'une quantité prédéterminée de résine s'est écoulée à travers la vanne d'infusion.

5. Appareil de maintien d'insert selon la revendication 1, où l'ensemble d'entraînement comprend un piston (28) qui commande le mouvement du montant de retenue de la première à la seconde position.

6. Procédé pour former un surmoulage (70) sur un estampage (50), comprenant les étapes consistant à :
réaliser :
un actionneur (20) comprenant un système moteur (22), un ensemble d'entraînement (24) et une unité de commande (26) ;
un outil de moulage d'insert (60) ; et
au moins un montant de retenue (40) ayant un axe (Y) défini à travers celui-ci fonctionnellement relié à l'ensemble d'entraînement de l'actionneur ;
mettre en prise l'estampage avec le montant de retenue pour maintenir l'estampage dans une position fixe dans l'outil de moulage d'insert ;
injecter une résine de surmoulage (70) sous pression dans l'outil de moulage d'insert ;
activer l'ensemble d'entraînement pour sortir de prise le montant de retenue de l'estampage et pour retirer le montant retenu à travers l'outil de moulage d'insert en réponse à un signal de l'unité de commande ; et
permettre à la résine de surmoulage de durcir et de se lier à l'estampage, le procédé étant **caractérisé en ce que :**
l'actionneur est configuré à la fois pour amener le montant de retenue à effectuer un mouvement de translation le long de l'axe et pour faire tourner le montant de retenue autour de l'axe pour faciliter la sortie de prise avec l'estampage.

7. Procédé selon la revendication 6, où après l'étape consistant à activer l'ensemble d'entraînement pour sortir de prise le montant de retenue, le procédé comprend en outre l'étape consistant à :
injecter de la résine additionnelle dans l'outil de moulage d'insert.

8. Procédé selon la revendication 6 ou 7, où l'unité de commande signale la sortie de prise et le retrait du montant de retenue après que 50% de l'outil de moulage d'insert ont été remplis de résine.

9. Procédé selon la revendication ou 7, où l'unité de commande signale la sortie de prise et le retrait du montant de retenue lorsque 50% à 95% de la résine ont été injectés dans l'outil de moulage d'insert.

10. Procédé selon la revendication 6 ou 7, où l'unité de commande signale la sortie de prise et le retrait du montant de retenue sur la base d'une lecture d'un duromètre (33).

11. Procédé selon la revendication 6 ou 7, où l'unité de commande signale la sortie de prise et le retrait du montant de retenue sur la base de l'expiration d'une période de temps prédéterminée.

12. Procédé selon la revendication 6 ou 7, où l'unité de commande signale la sortie de prise et le retrait du montant de retenue sur la base d'une lecture de pression prédéterminée.

13. Procédé selon la revendication 6 ou 7, où l'unité de commande signale la sortie de prise et le retrait du montant de retenue sur la base d'une viscosité prédéterminée.
